(19) **Europäisches Patentamt**
**European Patent Office**
**Office européen des brevets**

(11) **EP 4 614 120 A1**

(12) **EUROPEAN PATENT APPLICATION**

(43) Date of publication:
**10.09.2025 Bulletin 2025/37**

(21) Application number: **25158940.4**

(22) Date of filing: **19.02.2025**

(51) International Patent Classification (IPC):
**G01F 25/10** (2022.01)        **G01F 1/10** (2006.01)
**G01F 1/06** (2006.01)

(52) Cooperative Patent Classification (CPC):
**G01F 25/10; G01F 1/06; G01F 1/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.03.2024 US 202418593922**

(71) Applicant: Honeywell International Inc.
**Charlotte, NC 28202 (US)**

(72) Inventors:
• **BRAGG, Martin**
  **Charlotte, 28202 (US)**
• **KLAREN, Winfried**
  **Charlotte, 28202 (US)**
• **SAI, Bin**
  **Charlotte, 28202 (US)**

(74) Representative: **Haseltine Lake Kempner LLP**
**Cheapside House**
**138 Cheapside**
**London EC2V 6BJ (GB)**

(54) **NON-INTRUSIVE SENSING AND DIAGNOSTICS OF TURBINE FLOWMETERS**

(57)    Methods and systems for non-intrusive sensing and diagnostics of a turbine flowmeter can involve monitoring a turbine flowmeter with non-invasive sensors, extracting blade frequencies associated with turbine blades based on a flow rate, detecting pressure wave frequencies associated with the turbine flowmeter's internal moving parts, and employing multi-sensor fusion with respect to sensor data generated from non-invasive sensors including the extracted blade frequencies and the pressure wave frequencies to identify a health condition of the turbine flowmeter and to predict maintenance for the turbine flowmeter. The non-intrusive sensors can be installed in proximity to positions of moving parts of the turbine flowmeter such as turbine blades, bearings, rotor, and so on.

FIG. 5

## Description

TECHNICAL FIELD

Embodiments are generally related to the field of condition monitoring and predictive maintenance in industrial instrumentation. Embodiments further relate to methods, systems, and devices for non-intrusive sensing and diagnostics of turbine flowmeters.

BACKGROUND

A turbine meter, also referred to as a turbine flowmeter, is a device used for the measurement of the flow rate of fluids, particularly gases, by utilizing a rotating turbine within a pipe. The rotation of the turbine is proportional to the fluid flow, allowing for the accurate measurement of volume or mass flow rates in various industrial applications.

Turbine meters have been around since at least 1940, and there are millions of mechanical gas flowmeters in use worldwide. For example, a major gas utility company in a large city has set up tens of thousands of meters for commercial and industrial users to measure city gas distribution networks. Globally, it's estimated that over the last 30 years (1990-2019), at least 6.5 million turbine meters have been installed. However, these devices possess mechanical parts that can wear out and break down over time, especially when exposed to significant changes in flow and pressure in the transmission pipelines.

In the context of the ongoing shift towards sustainability and decarbonization, there is an increasing adoption of clean and renewable energy sources such as hydrogen (H2) and bio-gas. These alternative fuels are being injected into existing gas pipelines more frequently. Notably, hydrogen has adverse effects on the fatigue properties of mechanical components, leading to issues like embrittlement. This, in turn, can result in problems such as cracks and defects in meter rotors, ultimately causing malfunctions in blades and bearings.

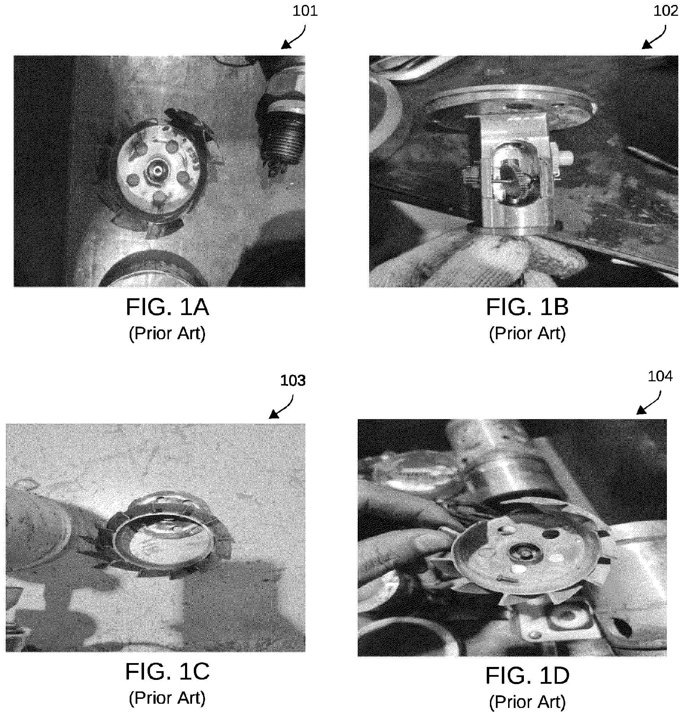

FIG. 1A, FIG. 1B, FIG. 1C, and FIG. 1D illustrate prior art images 101, 102, 103, and 104, respectively, of damaged meters. Images 101, 102, 103, and 104 depict the condition of inspected meters, which clearly demonstrate mechanical fatigue, which in turn can result in malfunction of various meter rotor components. The images 101, 102, 103, and 104 show examples of mechanical fatigue evident in these meter mechanisms, a condition that poses a significant risk to the operational integrity of various rotor components within the meters. During performance of manual and opening inspection, the visible manifestations of mechanical fatigue not only underscore the potential for malfunction within these crucial metering systems, emphasizing the imperative for remedial interventions to mitigate the impending issues, but also demonstrate the need for non-intrusive and real-time detection techniques to ensure sustained functionality and provide early detection and predictive maintenance schedule.

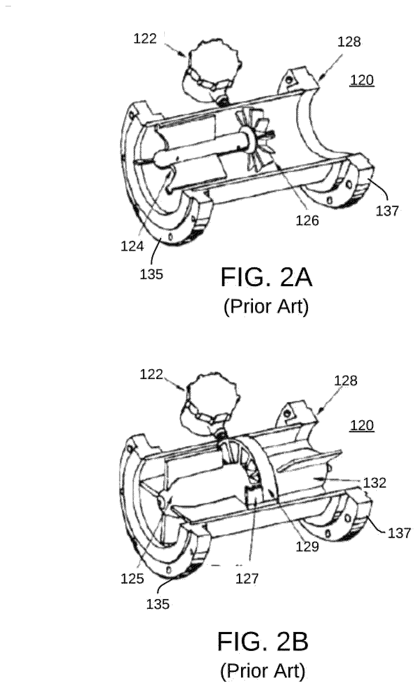

FIG. 2A and FIG. 2B illustrate images of prior art pulse or frequency counter configurations based on the use of an intrusive sensor for a pulse reader. FIG. 2A shows a cut-away perspective view of a meter 120 having a meter housing that include circular meter housing end portions 135 and 137, and a pulse pickup assembly 122. An open bladed rotor 126 is located within the meter 120 with respect to a stator 124. FIG. 2B depicts a cut-away perspective view of the meter 120, but with additional components including a downstream stator 132 and a rimmed rotor 129 positioned next to a deflector ring 127 and an upstream rotor 125. The configurations shown in FIG. 2A and FIG. 2B, indicate that existing solutions can use a direct invasive pulse pickup assembly for measurement activities. Such existing applications, however, suffer from the problems discussed above.

These challenges impact the user experience by potentially yielding highly inaccurate or incorrect fiscal metering outcomes, compromising the legal metrology and reliability of the installed meters. The fact that damaged metal parts and measurement accuracy degradation are not visible from the outside necessitates periodic manual inspections. However, identifying (partially) defective devices through manual inspection is a cumbersome process that often requires downtime. By the time these issues are discovered, it is frequently too late. Consequently, there is a clear need for real-time, non-intrusive sensing and diagnostics for existing meters as well as new meters to enable customers and users to have an early-time overview of their meter status, to enable predictive maintenance, especially at remote locations.

BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the embodiments to provide for methods, systems, and devices for non-intrusive sensing and diagnostics of turbine flowmeters.

It is a further aspect of the embodiments to provide for methods, systems and devices for obtaining, analyzing, and extracting distinctive signatures of the condition of a turbine flowmeter.

It is a further aspect of the embodiments to provide for methods, systems and devices that facilitate the automatic detection of anomalies with respect to a turbine flowmeter and provide valuable information for timely and precise repair work.

The aforementioned aspects and other objectives can now be achieved as described herein. In an embodiment, a method for non-intrusive sensing and diagnostics of a turbine flowmeter that can be installed on, for example, a pipeline, can involve monitoring a turbine flowmeter with a plurality of non-invasive sensors, the turbine flowmeter including turbine blades, extracting blade nominal frequencies associated with the turbine blades based on a flow rate, detecting pressure wave frequencies associated with the turbine flowmeter; and employing multi-sensor fusion with respect to sensor data generated from the plurality of non-invasive sensors including the extracted blade frequencies and the pressure wave frequencies including possible defects associated frequency components to identify a health condition of the turbine flowmeter and to predict maintenance for the turbine flowmeter.

In an embodiment, monitoring the turbine flowmeter with the plurality of non-invasive sensors, can further involve: capturing acoustic and acceleration signals through a wall and a housing of a device-under-test (DUT) using the plurality of non-invasive sensors, wherein the DUT comprises the turbine flowmeter.

In an embodiment, extracting the blade frequencies associated with the turbine blades based on the flow rate, can involve: determining from unique signal signatures extracted from acoustic and acceleration signals generated from the plurality of non-invasive sensors, the blade frequencies generated by the turbine blades based on a correlation between the flow rate of the turbine flowmeter and a rotational speed of the turbine blades; performing a time-frequency analysis with respect to sensor data derived from the plurality of sensors to detect or eliminate harmonics; and cross-correlating a blade-generated frequency of the turbine blades with a sensor-detected frequency detected by the plurality of non-invasive sensors.

In an embodiment, detecting the pressure wave frequencies associated with the turbine flowmeter, can further involve detecting the pressure wave frequencies generated by rotational effects of the turbine blades and possible defective and/or missing parts in the turbine meter using the plurality of non-invasive sensors to acquire and evaluate data within a defined two-dimensional moving capture window (MCW).

In an embodiment, the plurality of non-invasive sensors can include, for example, at least one acoustic sensor and at least one accelerometer.

In an embodiment, the at least one accelerometer can be in contact with a surface coupling of a wall of the turbine flowmeter.

In an embodiment, the at least one accelerometer and the at least one acoustic sensor can generate frequency responses including a maximum frequency related to the flow rate measurable normally by the turbine flowmeter.

In an embodiment, the time-frequency analysis can comprise a high-order moment analysis and bi-spectrum with respect to sensor data generated from the plurality of non-invasive sensors to detect and eliminate harmonics.

In an embodiment, employing the multi-sensor fusion with respect to the sensor data generated from the plurality of non-invasive sensors, can further involve: using the multi-sensor fusion to analyze cross-correlated results, extract the sensor signatures, and correlate the sensor signatures to a normal situation and an abnormal situation, including damaged components of the turbine flowmeter.

An embodiment can further involve: issuing an alert and/or an alarm to a local or remote location to provide an early warning for scheduling maintenance and repair of the turbine flowmeter, in response to identifying the health condition predicting maintenance for the turbine flowmeter.

In an embodiment, the plurality of non-intrusive sensors can be installed in proximity to positions of moving parts of the turbine flowmeter.

In an embodiment, a method for non-intrusively sensing and diagnosing a turbine flowmeter, can involve: monitoring a turbine flowmeter using multiple non-invasive sensors that detect can detect the behavior of turbine blades (e.g., internal running turbine blades) of the turbine flowmeter, identifying frequencies associated with a movement of the turbine blades based on a flow rate determined by the multiple non-invasive sensors, detecting frequencies of pressure waves associated with an operation of the turbine flowmeter, performing a multi-sensor fusion combining sensor data from the various non-invasive sensors among the multiple non-invasive sensors, wherein the combined sensor data includes both the frequencies extracted from the turbine blades and the pressure wave frequencies, and analyzing the combined sensor data to determine a health condition of the turbine flowmeter and to predict when maintenance for the turbine flowmeter is required.

In an embodiment, a system for non-intrusive sensing and diagnostics of a turbine flowmeter, can include: a plurality of non-invasive sensors for monitoring a turbine flowmeter comprising turbine blades and associated bearings, wherein the plurality of non-invasive sensors extract blade frequencies associated with the turbine blades based on a flow rate and detect pressure wave frequencies associated with the turbine flowmeter; and a multi-sensor fusion module for performing a multi-sensor fusion of sensor data generated from the plurality of non-invasive sensors including the extracted blade frequencies and the pressure wave frequencies, wherein the sensor data fused by the multi-sensor fusion module facilitate robust and reliable identification of a health condition of the turbine flowmeter and predictive maintenance with respect to the turbine flowmeter.

In an embodiment of the systems, the plurality of non-invasive sensors can capture acoustic and acceleration signals through a wall and a housing of a device-under-test (DUT), wherein the DUT comprises the turbine flowmeter.

In an embodiment of the system, nominal blade frequencies can be generated by the turbine blades based on a correlation between the flow rate of the turbine flowmeter and a rotational speed of the turbine blades propelled by the moving force of fluid measured by the turbine flowmeter, while the real frequencies can be determined from signal signatures extracted from acoustic and acceleration signals generated from the plurality of non-invasive sensors. For example, at a given flow rate, if the turbine flowmeter is in a normal situation, the real frequency determined by the non-invasive sensors is within a narrow range of nominal frequency. On the other hand, the real frequencies determined by the non-invasive sensors may be outside the nominal frequencies and can indicate the need for further verification of an abnormal situation using cross-correlation, and harmonics suppression techniques.

In an embodiment of the system, a time-frequency analysis can be performed with respect to sensor data derived from the plurality of sensors to detect or eliminate harmonics.

In an embodiment of the system, a blade-generated frequency of the turbine blades can be cross-correlated with a sensor-detected frequency detected by the plurality of non-invasive sensors. Comments: please see what is added in [018] which is aligned here as well.

In an embodiment of the system, the pressure wave frequencies generated by blade rotation of the turbine blades in the turbine meter can be detected using the plurality of non-invasive sensors within a defined two-dimensional moving capture window.

In an embodiment of the system, the plurality of non-invasive sensors can include one or more acoustic sensors and one or more accelerometers.

In an embodiment, the one or more accelerometers can be in contact with a surface coupling of a wall of the turbine flowmeter.

In an embodiment, the one or more accelerometers and the one or more acoustic sensors can generate frequency responses including the maximum frequency related to the flow rate measurable normally by the turbine flowmeter. Note that acoustic sensors and accelerometers can be either placed in a single unit device or can be deployed in two or more unit devices separately.

In an embodiment, the time-frequency analysis can comprise a high-order moment analysis and bi-spectrum with respect to sensor data generated from the plurality of non-invasive sensors to detect and eliminate harmonics.

In an embodiment, the multi-sensor fusion can be used to analyze cross-correlated results, extract the sensor signatures, and correlate the sensor signatures to a normal situation and an abnormal situation, including damaged components of the turbine flowmeter.

In an embodiment, an alert and/or an alarm can be issued to a local or remote location to provide an early warning for scheduling maintenance and repair of the turbine flowmeter, in response to identifying the health condition predicting maintenance for the turbine flowmeter.

## BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.

FIG. 1A, FIG. 1B, FIG. 1C, and FIG. 1D illustrate images of prior art damaged meters;

FIG. 2A and FIG. 2B illustrate a prior art intrusive frequency counter based on a pulse reader;

FIG. 3 illustrates a flow chart of operations depicting logical operational steps of a method for non-intrusive sensing and diagnostics of a turbine flowmeter, in accordance with an embodiment;

FIG. 4 illustrates a flow chart of operations depicting logical operational steps of a method of correlation of blade frequency and revolutions per second (RPS), in accordance with an embodiment;

FIG. 5 illustrates a table depicting example results derived from a method for non-intrusive sensing and diagnostics of a turbine flowmeter, in accordance with an embodiment;

FIG. 6A and FIG. 6B illustrates an example of schematic diagrams of a non-intrusive sensing installation example, in accordance with an embodiment; and

FIG. 7 illustrates a graphs depicting processed non-intrusive sensor data indicative of an abnormal situation when a blade is missing, in accordance with an example embodiment.

In the drawings described and illustrated herein, identical or similar parts and elements are generally indicated by identical reference numerals.

## DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Furthermore, the term "at least one" as utilized herein may refer to "one or more". For example, "at least one" widget may refer to "one or more widgets".

Terms such as "a," "an," or "the", again, may be also understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

Note that the term "meter" as utilized herein can relate to a turbine meter or other types of meters involving turbine applications or other rotational applications or rotational equipment such as, for example, a compressor. That is, the term "meter" as utilized herein can refer to a broad spectrum of devices that may be used for measuring various quantities in rotational equipment such as, for example, turbine applications or compressors. A "meter" can be used to measure fluid flow rates in rotational equipment such as turbines and compressors, along with monitoring other conditions such as, for example, pressure, temperature, and/or other relevant parameters. The term meter can thus relate to a diverse range of meters employed within turbine systems and other rotational equipment and rotational applications/-devices such as compressors.

The embodiments relate to methods, systems and devices for non-intrusive sensing and diagnostics of turbine flowmeters. The embodiments can wirelessly monitor turbine flowmeters by capturing the acoustic and acceleration signals through the wall and housing of, for example, a device-under-test (DUT) by using non-invasive battery-driven sensors. This approach can extract signal signatures and determine the frequencies generated by turbine blades based on the correlation between the flow rate and the turbine rotational speed. The blade-rotation can generate a disturbance in the turbine meter, which creates pressure waves, and acoustic/accelerometer sensors can be utilized to detect the generated pressure wave frequencies in the power spectrum by capturing the data with a defined two-dimensional moving capture window.

This solution can also perform time-frequency analysis (including high-order moment analysis, Bi-spectrum) with respect to sensor data to detect or eliminate the harmonics. The blade-generated frequency associated with a real-time operational flow rate and sensor detected frequency can be cross-correlated with each other. Furthermore, a multi-sensor fusion can analyze the cross-correlated results, extract meaningful sensor signatures, and correlate sensor signatures to a normal situation (e.g., fingerprints and reference files) and an abnormal situation such as damaged or missing components. A predictive maintenance model can generate maintenance schedules for the turbine flowmeter based on the accumulated data to infer an evolution of anomaly such as frequency shifting, covariance increase in time and frequency domains, and so on.

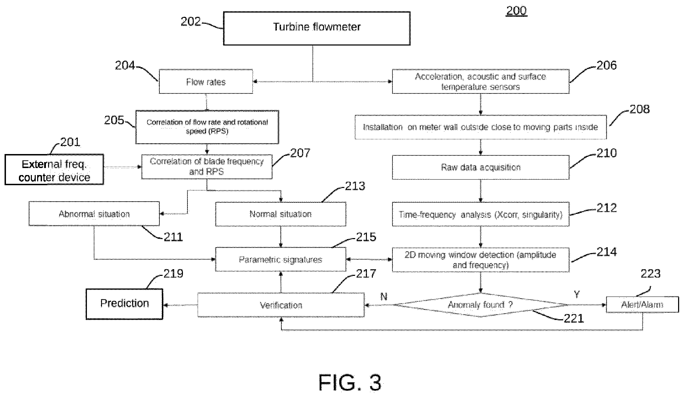

FIG. 3 illustrates a flow chart of operations depicting logical operational steps of a method 200 for non-intrusive sensing and diagnostics of a turbine flowmeter, in accordance with an embodiment. As shown at block 202, a turbine flowmeter can be provided, which may be subject to sensing applications such as the detection of acceleration by an acceleration meter, acoustic sensing by one or more acoustic sensors, and surface temperature sensing by one or more temperature sensors. In addition, the turbine flowmeter may be subject to flow rate detection by a flowmeter of itself or additional ones.

Note that although such examples sensors are not shown in FIG. 3, these various sensing operations are described with respect to one or more steps or operations as illustrated in the various blocks depicted in FIG. 3. For example, as shown at block 204, a flow rate sensing step or operation may be implemented with respect to the turbine flowmeter described at block 202 for the generation of flow rate data associated with the turbine flowmeter.

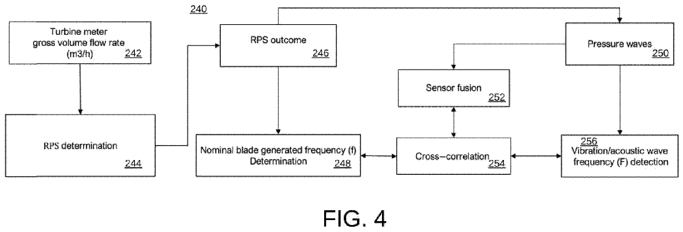

Similarly, as shown at block 206, one or more steps or operations involving sensors may be implemented with respect to the turbine flowmeter shown at block 202. For example, a step or operation may be implemented, as shown at block 206 with respect to the turbine flowmeter depicted at block 202 involving the use of an acceleration sensor for detecting acceleration data, one or more acoustic sensors for detecting acoustic data, and one or more surface temperature sensors for detecting surface temperature data. Such data (e.g., acceleration data, acoustic data, surface temperature data, etc.) can be then cross-correlated with the data output as a result of processing the step or operation shown at block 202 and the following blocks. Details for this cross-correlation operation are shown in block 254 in FIG. 4.

Following processing of the flow rate detection operation shown at block 204, a step or operation for correlating the detected flow rate data and rotational speed or revolutions per second (RPS) can be implemented as shown at block 205. Thereafter, as shown at block 207, a step or operation can be implemented for correlating blade frequency and RPS (Revolutions per second). Note that the step or operation of determining blade frequency can be verified from processing of a step or operation involving data collected from, for example, an external frequency counter device as shown at block 201, there are various ways to verify the RPS associated frequencies.

Note that an external frequency counter device may not be required in a practical implementation of an embodiment based on intrusive measurement methods. The external frequency counter device can be used for reference verification and/or training during factory testing for normal situation and can be implemented as an electronic instrument or component that can measure frequency including the number of cycles of oscillation or pulses per second in a periodic electronic signal. Following processing of the step or operation shown at block 207, steps or operations involving an 'abnormal situation' as indicated at block 211 and/or a 'normal situation' as shown at block 213 can be implemented.

Note that an abnormal situation may indicate a state or condition deviating from the expected or normal behavior, often implying a potential issue or malfunction within the system being monitored. A normal situation, on the other hand, may denote a standard operating condition or behavior of the system, where everything functions within expected parameters without any anomalies or abnormalities. The results from the step or operation processed as indicated at block 211 (abnormal situation) and as shown at block 213 (normal situation) can be subject to a step or operation involving the generation of parametric signatures as shown at block 215.

Parametric signatures may be characteristic patterns or features extracted from data that can provide insight into the condition or performance of the system being monitored, and which may be used for diagnostics or predictive analysis. The parametric signatures can include discrete frequency signatures that can function as a fingerprint, and may include other parameters (e.g., Xcorr / cross-correlation data). Verification (block 217) may be supervised using known cases in model training. Predication (block 219) may be implemented as a result of parametric signatures and tracking of frequency shifting and parametric, e.g. covariance trending behavior.

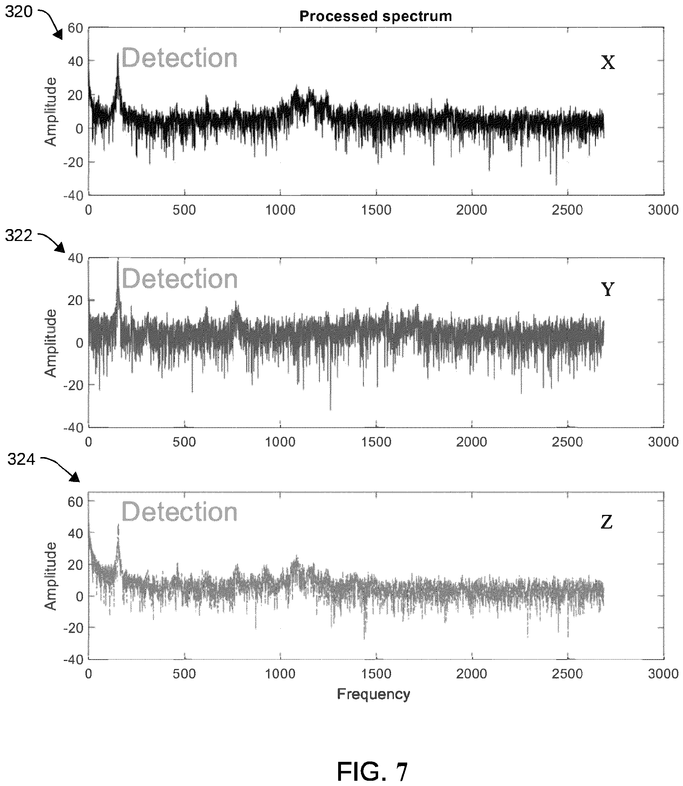

Returning now to the sensing step or operation shown at block 206 (i.e., acceleration sensing, acoustic sensing, surface temperature sensing), a step or operation can be implemented as shown at block 208 involving installation on a meter wall outside but close to moving parts within a meter (see, for example, the configuration shown in FIGS. 7A-7B). Next, a step or operation can be implemented involving the acquisition of raw data as shown at block 210. Note that 'raw data acquisition" as utilized herein can relate to a process of collecting unprocessed data directly from sensors or other sources without any manipulation or alteration.

Thereafter, as depicted at block 212, an operation involving time-frequency analysis (e.g., high-order moment analysis, Bi-spectrum and cross correlation, singularity identification) can be implemented followed by a step or operation involving two-dimensional (2D) moving window detection (amplitude and frequency) as shown at block 214. Note that '2D moving window detection' can involve analyzing data within a two-dimensional window that can move across a dataset, typically to identify patterns or anomalies in terms of both amplitude and frequency. Furthermore, time-frequency analysis may involve analyzing signals or data in both the time and frequency domains to understand how their characteristics change (e.g., frequency fingerprint change) over time, thereby enabling detection of transient events or frequency variations. Time-frequency analysis can also be conducted as a stochastic analysis in time and frequency domain with detection including high-order moment analysis (e.g., bi-spectrum or power spectrum for monochromatic related harmonic detection).

The data generated from the step or operation shown at block 214 can be implemented with the parametric signature operation shown at block 215. Likewise, data generated as a result of parametric signature operation depicted at block 215 can be utilized with the 2D moving window detection operation as shown at block 214. Following processing of the 2D moving window detection depicted at block 214, a test can be performed as shown at decision block 221 to determine if an anomaly has been found. If so, then as indicated at block 223 an alert/alarm can be generated followed by the processing of a verification and tuning step or operation as shown at block 217 and block 215.

If or when it is determined that an anomaly has not been found as a result of processing the step or operation shown at block 221 (anomaly detection test), the verification step or operation depicted at block 217 can be implemented to verify that an anomaly has not been found. Following processing of the verification step or operation shown at block 217, a step or operation involving a prediction can be implemented as shown at block 219. The results from the verification step or operation depicted at block 217 can also be included as a feedback tuning to the part of the parametric signature operation shown at block 215 for further tuning and optimization.

It can be appreciated that the method 200 described above with respect to FIG. 3 offers several advantages. For example, by utilizing sensors positioned outside but in close proximity to the moving parts within the meter, the method 200 enables non-intrusive monitoring by means of various external mounting mechanisms such as a magnet, a threading and/or an adhesive pad, and so on. This approach minimizes the need for direct contact with the components being monitored, thereby reducing the risk of interference with normal operation and simplifying maintenance procedures, especially for already installed meters. The method 200 can incorporate multiple sensing modalities, including but not limited to acceleration, acoustic, and surface temperature sensing, in addition to flow rate detection. This comprehensive approach allows for the collection of diverse data types, providing a more holistic view of a turbine flowmeter's performance and condition.

In addition, by correlating various data streams such as flow rate, rotational speed, and blade frequency, the method 200 can facilitate deeper insights into the relationships between different operational parameters. This correlation analysis enhances diagnostic capabilities, enabling the detection of abnormal situations and the identification of potential issues at an early stage. The method 200 also involves the generation of parametric signatures based on the collected data, which can serve as characteristic patterns indicative of the turbine flowmeter's condition. These parametric signatures can provide valuable information for diagnostics and predictive maintenance, enabling proactive measures to be taken to prevent the occurrence of potential failures or malfunctions.

Through techniques such as time-frequency analysis and 2D moving window detection, the method 200 can enable the detection of anomalies in the collected data. This allows for the timely identification of deviations from normal behavior, triggering alerts or alarms for further investigation. Additionally, the method supports predictive analysis, facilitating the anticipation of potential issues based on observed patterns and trend. The method 200 also includes steps for verification and validation to ensure the accuracy and reliability of the detection of anomalies. This systematic approach can enhance confidence in the diagnostic results, enabling informed decision-making regarding maintenance actions or operational adjustments. The method 200 shown in FIG. 3 thus can offer a robust framework for non-intrusive sensing and diagnostics of turbine flowmeters remotely, providing valuable insights into their performance, condition, and identifying potential failure modes.

FIG. 4 illustrates a flow chart of operations depicting logical operational steps of a method 240 of correlation of blade frequency and RPS, in accordance with an embodiment. As shown at block 242, a step or operation can be implemented to determine a turbine meter gross volume flow rate, *Q* expressed in *m3/h*. Next, as depicted at block 244, the following calculations can be implemented to determine RPS in following equation (Eq. 1):

$$RPS = \frac{\pi D^2}{4N} \cdot v \cdot Pn \cdot (1+k) \quad (1)$$

Where,

RPS denotes revolutions per second
N is number of blades in the turbine meter under investigation (known constant per meter size);
Pn represents pulse numbers per cubic meter (known constant per meter size and type);
*k* is the error correction factor in percentage (known constant per meter size and type);
D is the turbine inner meter diameter (m);
*v* is flow velocity (m/s)

Thereafter, as depicted at block 246, a step or operation can be implemented involving generation of the RPS data, which can be then used as part of a step or operation for determining a blade generated frequency as shown at block 248 and for determining pressure waves, as shown at block 250. The operation shown at block 248 can be implemented based on the following equation (Eq. 2):

$$f(Hz) = \frac{\pi D^2}{4} \cdot v \cdot Pn \cdot (1+k) \quad (2)$$

Where,

*f* is the output of frequency generated by rotation of rotor blades in proportion with flow rate inside the flowmeter;
Pn represents pulse numbers per cubic meter (known constant per meter size and type);
*k* is the error correction factor in percentage (known constant per meter size and type);
D is the turbine inner meter diameter (m);
*v* is flow velocity (m/s)

Following processing of the operation shown at block 250, an operation involving sensor fusion can be implemented as shown at block 252 and an operation can be implemented as depicted at block 256 involving vibration/acoustic wave frequency detection. Data obtained from the step or operation shown at block 256 (*F(Hz)*) can be used as part of a cross-correlation step or operation as depicted at block 254 as follows:

$$U = Xcorr(f, F) \qquad (3)$$

Where,

f is the output of frequency generated by rotation of rotor blades in proportion with flow rate inside the flowmeter;
F is the frequency detected by meter-wall-surface attached acoustic and accelerometer sensors
U denotes cross correlation output

Likewise, data generated as part of the cross-correlation step or operation shown at block 254 can be used with the vibration/acoustic wave frequency detection step or operation indicated at block 256. The cross-correlation data determined as a result of the step or operation depicted at block 254 can also be used as a part of the sensor fusion operation shown at block 252. The sensor fusion operation shown at block 252 can combine various data provided from acoustic and acceleration sensors (e.g., accelerometer and MEMS microphone) to make a "cross-check detection" decision. The *Xcorr* (cross-correlation) of bi-spectral outputs may be used as a way to fuse the data. It should be appreciated, however, that there are other methods to implement the disclosed sensor fusion scheme as well as, for example, image-processing.

Data generated as a result of the sensor fusion step or operation shown at block 252 likewise can be provided to and used as a part of the cross-correlation step or operation shown at block 254 as feedback tuning and also for feedback tuning that implicitly takes place as a part of the implementation of the operations depicted at blocks 248 and 256. Data determined as a result of the step or operation shown at 254 can be used as a part of the frequency determination step or operation shown at block 248 and 256. Similarly, data from the frequency determination step or operation can be provided to and use as a part of the cross-correlation step or operation shown at block 254.

Note that the term "sensor fusion" as used in the context of, for example, the step or operation shown at block 252 can relate to a process of combining data from multiple sensors to obtain a more comprehensive and accurate understanding of a system or environment than would be possible with individual sensors alone. In the context of the described method 240, sensor fusion can involve integrating data and features from various sensors, such as those monitoring vibration, acoustic waves, and other parameters, to enhance the analysis of turbine meter performance and detectability and of anomalies more effectively and for some difficult or rare cases to improve a detection confidence level stochastically.

Note that block 252 can be implemented as or facilitated by a multi-sensor fusion module that can perform the aforementioned multi-sensor fusion of sensor data generated from the non-invasive sensors discussed herein. The sensor data can include the extracted blade frequencies and the pressure wave frequencies and/or other data. Such example sensor data fused by the multi-sensor fusion module can facilitate identification of a health condition of the turbine flowmeter and predictive maintenance with respect to the turbine flowmeter. Block 252 can thus be referred to as a multi-sensor fusion module.

Note that the term *module* as utilized herein may refer to a collection of routines and data structures that perform a particular task or implements a particular data type. Modules may be composed of two parts: an interface, which lists the constants, data types, variable, and routines that can be accessed by other modules or routines, and an implementation, which may be typically private (accessible only to that module) and which includes source code that actually implements the routines in the module. The term module may also simply refer to an application, such as a computer program designed to assist in the performance of a specific task. In some example embodiments, the term "module" may refer to a modular hardware component or a component that is a combination of hardware and software.

The term "cross-correlation" as shown in FIG. 4 with respect to the step or operation shown at block 254 can relate to a mathematical operation that can be used to measure the similarity between two signals or digital data arrays as a function of the displacement of one relative to the other. In the context of method 240, cross-correlation is employed to analyze the relationship between different data streams, such as vibration or acoustic wave frequencies and blade-generated frequencies. This analysis helps identify patterns or correlations between these signals, providing insights into the operation and condition of the turbine meter.

The term "blade-generated frequency" as shown in, for example, block 248, can relate to the expression frequency at which the blades of the turbine meter rotate. This frequency can be directly related to the rotational speed or RPS of turbine blades and can be crucial for determining the flow rate through the meter in normal situation. In the described method, the blade-generated frequency is calculated based on the RPS data obtained from the turbine meter. Analysis of this frequency can be helpful in assessing the performance and efficiency of the turbine meter and can be used in conjunction with other data, such as vibration or acoustic wave frequencies, for diagnostics and anomaly detection and verification.

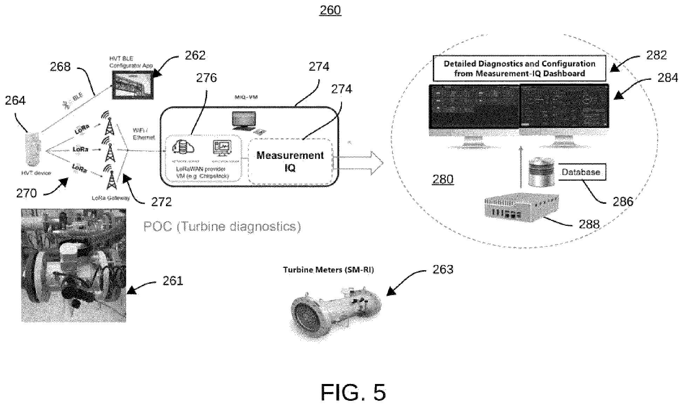

FIG. 5 illustrates a schematic diagram of a system 260 for non-intrusive sensing and diagnostics of a meter such as a turbine flowmeter 261, in accordance with an embodiment. The system 260 can integrate various components to enable efficient monitoring and analysis of meter performance. An important component of system 260 is a transmitter such as, for example, a Honeywell Versatilis™ Transmitter (HVT) device 264, which can facilitate bidirectional wireless communications via Bluetooth Low Energy (BLE) 268. This device can interface with an HVT BLE Configurator Application 262, allowing for configuration and management of the HVT device's functionalities.

Note that a Honeywell Versatilis™ Transmitter is a multi-variant sensor based on BLE for short distance and the latest LoRaWAN® protocol communication technology for long distance data communications. HVT offers an inherently low power, compact design and quick and easy installation and commissioning. A Honeywell Versatilis™ Transmitter can utilize long-range, low-energy LoRaWAN® protocol to efficiently relay data relating to rotating equipment health and the ambient environment over large areas. It can also support Bluetooth Low Energy (BLE) communications for quick and reliable configuration and troubleshooting and data transfer. It should be appreciated that the HVT device 264 is one example of a transmitter device that can be implemented in accordance with one or more embodiments. Other types of non-HVT devices may be utilized instead of an HVT based device. For example, in some embodiments the aforementioned sensors can be installed in separate devices instead of in a single device.

Additionally, the HVT device 264 utilizes LoRa (Long Range) communication protocol 270 to connect with a LoRa gateway 272. This gateway serves as a bridge to transmit data to a WiFi/Ethernet-enabled device, specifically an MIQ-VM 274. Within the MIQ-VM 274, a LoRaWAN Provider Virtual Machine (VM) 276 can manage communication protocols and interfaces with a network server and application server, facilitating the transmission of measure IQ data 278.

The received measure IQ data 278 can be then relayed to a diagnostics sub-system 280 for further analysis. This sub-system comprises a Measurement-IQ Dashboard 282, accessible for visualization and monitoring via a display/monitor 284. Additionally, a dedicated database 286, possibly hosted or provided by a server 288, can store relevant data for historical analysis and reference. It is worth noting that the described system 260 can accommodate various types of turbine meters, exemplified here by turbine meter 261 and turbine meter 263. This versatile setup can ensure adaptability and scalability, catering to different metering needs within diverse environments.

Amidst increasing cost pressures stemming from the privatization of network assets, there's a growing demand for remote service solutions. Concurrently, the utility sector faces a significant knowledge drain due to staff reductions, as seasoned operators exit the workforce. The proposed solution addresses these challenges by facilitating real-time data collection from assets for condition-based maintenance (CBM) and presenting the health and operational conditions through optimized dashboards.

CBM can incorporate newly developed sensors and sensing devices, coupled with physics-based and machine learning and artificial intelligent-based algorithms, to detect abnormal changes in equipment or environmental conditions. This proactive approach enables the rapid identification of problems and issuance of tailored alerts to operations, maintenance, streamlining issue resolution beyond conventional preventive maintenance practices.

Operating autonomously, the system ensures continuous (e.g., 24/7) monitoring to detect equipment failures at their earliest stages. By continuously comparing processed sensor data signatures (e.g., temperature, acoustics, and vibration) with the reference database established during installation or calibrations, deviations are promptly flagged to end users through visual, audible, and/or electronic notifications.

Moreover, a recommendation engine may be used in some embodiments to provide likely root causes and solutions to end users or service departments, enhancing problem-solving efficiency. Beyond cost considerations, this approach enhances safety, reliability, and efficiency in fiscal measurements. Transitioning from automated to autonomous operations can advance safety and overall business value by enabling the system to make data-driven decisions related to normal and abnormal operations autonomously. This unified view of measurement equipment offers actionable intelligence, enabling quicker detection and diagnosis of issues, increased measurement certainty, prevention of downtime, and enhanced condition-based monitoring and maintenance to extend calibration periods.

The embodiments cover methods, systems and devices for non-intrusive monitoring of turbines, utilizing acceleration and acoustic signatures to assess the health and detect faults in connected devices. This proactive approach aims to prevent failures and predict maintenance needs, thereby reducing inaccurate metering caused by undetected damage in millions of turbine meters. Additionally, the method offers an alternative flow measurement technique using non-invasive sensors installed on outer surface of the flow meter by analyzing detected frequencies, such as blade rotation (revolutions per second), in relation to flow rates. Importantly, this approach extends beyond turbine flowmeters and is applicable to all mechanical devices with moving parts such as, for example, compressors.

The method and system described herein consist of four key elements: 1. non-intrusive sensing, wherein signals can be captured through the wall and housing of a Device Under Test (DUT), eliminating the need for invasive monitoring techniques; 2. multi-sensor data acquisition involving acoustic and vibration accelerometers provide time series data within a defined capture window, with the option to include surface and ambient temperature measurements; 3. multi-sensor fusion for analytics detection, which can involve extracting meaningful sensor signatures, such as sinusoidal and multi-wavelet components, and correlating them to indicators of blade deformation, damaged components, or high friction bearings, among other potential issues; and 4. a predictive maintenance model, wherein accumulated data can be utilized to develop a near-failure-mode model, enabling predictive maintenance scheduling to address issues before they escalate.

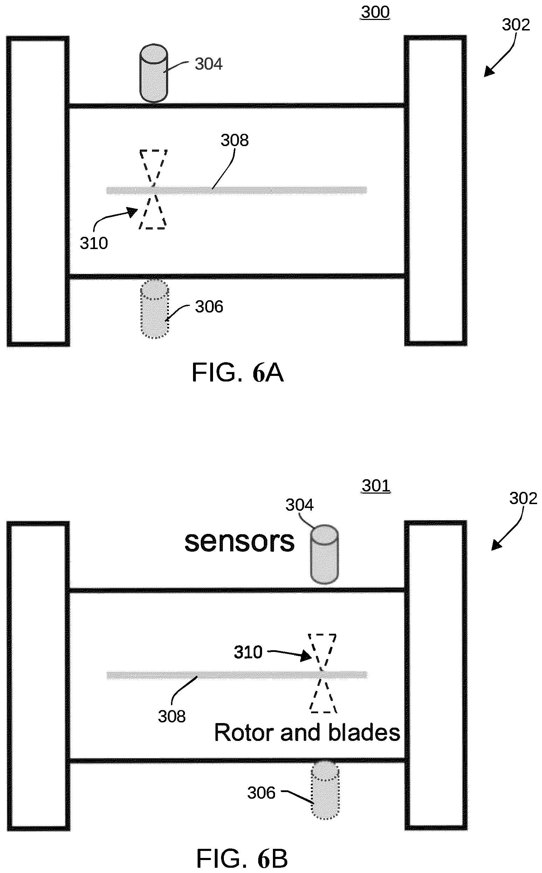

FIG. 6A and FIG. 6B illustrates schematic diagrams of a non-intrusive sensing installation example, in accordance with an embodiment. In FIG. 6A, a system 300 is shown, which includes a turbine flowmeter 302 and a group of non-intrusive sensors 304, 306, which may be used to monitor a rotor 308 and blades 310 and other internal components of the turbine flowmeter 302. In some embodiments, each non-intrusive sensor 304 and 306 may be configured in the context of a cylindrically-shaped housing. In FIG. 6B, an alternative system 301 is shown which includes the same components as depicted in FIG. 6A but with the non-intrusive sensors 304, 306 located in different location with respect to the turbine flowmeter 302. FIG. 6A and FIG. 6B demonstrates that the non-intrusive sensors 304, 306 can be installed in proximity to positions of moving parts of the turbine flowmeter 302 such as the rotor 308 and blades 310.

FIG. 7 illustrates a graphs 320, 322, and 324 depicting data indicative of an abnormal situation exhibited on three axes when, for example, a turbine rotor blade is missing, in accordance with an example embodiment. Each of the graphs 320 (x-axis), 322 (y-axis), and 324 (z-axis) depict a processed spectrum with varying detection waves. The example graphs 320, 322, and 324 depict data indicating that something unusual is happening with respect to a turbine flowmeter such as turbine flowmeter 302 that measures the flow rate relating to a nominal frequency. For example, if a blade of the turbine is missing or damaged, graphs 320, 322, and 324 in one or more axes can display processed information with different types of detection waves from the normal situation where a flow-rate based nominal frequency can be closely correlated to the detected wave. The graphs 320, 322, and 324 provide a visual representation of what the non-intrusive sensors 304, 306, for example, detect when there's an abnormal situation, which can be help operators identify issues associated with the turbine flowmeter 302.

It should be appreciated that although the operations of the devices, systems and/or method(s) herein are shown and described in a particular order, the order of the operations may be altered so that certain operations may be performed in an inverse order or so that certain operations may be performed, at least in part, concurrently with other operations. In another embodiment, instructions or sub-operations of distinct operations may be implemented in an intermittent and/or alternating manner.

At least some of the operations described or features herein can be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), a digital video disk (DVD), Flash memory, and so on.

Alternatively, embodiments may be implemented in hardware or in an implementation containing hardware and software elements. In embodiments that do utilize software, the software may include firmware, resident software, microcode, etc.

In some alternative implementations, the functions noted in the blocks may occur out of the order noted in the figures. For example, two blocks shown in succession may, in fact, be executed concurrently, or the blocks may sometimes be executed in the reverse order, depending upon the functionality involved. It will also be noted that the blocks of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Based on the foregoing, it can be appreciated that a number of varying embodiments are disclosed herein. For example, in an embodiment, a method for non-intrusive sensing and diagnostics of a turbine flowmeter, can involve: monitoring a turbine flowmeter with a plurality of non-invasive sensors, the turbine flowmeter including turbine blades; extracting blade frequencies associated with the turbine blades based on a flow rate; detecting pressure wave frequencies associated with the turbine flowmeter; and employing multi-sensor fusion with respect to sensor data generated from the plurality of non-invasive sensors including the extracted blade frequencies and the pressure wave frequencies to identify a health condition of the turbine flowmeter and to predict maintenance for the turbine flowmeter.

In an embodiment, monitoring the turbine flowmeter with the plurality of non-invasive sensors, can further involve: capturing acoustic and acceleration signals through a wall and a housing of a device-under-test (DUT) using the plurality of non-invasive sensors, wherein the DUT comprises the turbine flowmeter.

In an embodiment, extracting the blade frequencies associated with the turbine blades based on the flow rate, can further involve: determining from signal signatures extracted from acoustic and acceleration signals generated from the plurality of non-invasive sensors, the blade frequencies generated by the turbine blades based on a correlation between the flow rate of the turbine flowmeter and a rotational speed of the turbine blades; performing a time-frequency analysis with respect to sensor data derived from the plurality of sensors to detect or eliminate harmonics; and cross-correlating a blade-generated frequency of the turbine blades with a sensor-detected frequency detected by the plurality of non-invasive sensors.

In an embodiment, detecting the pressure wave frequencies associated with the turbine flowmeter, can further involve: detecting the pressure wave frequencies generated by blade rotation of the turbine blades in the turbine meter using the plurality of non-invasive sensors within a defined two-dimensional moving capture window, wherein the plurality of non-invasive sensors includes at least one acoustic sensor and at least one accelerometer.

In an embodiment, the at least one accelerometer can be in contact with a surface coupling of a wall of the turbine flowmeter.

In an embodiment, the at least one accelerometer and the at least one acoustic sensor can generate frequency responses including a maximum frequency related to the flow rate measurable normally by the turbine flowmeter.

In an embodiment, the time-frequency analysis can further comprise a high-order moment analysis and bi-spectrum with respect to sensor data generated from the plurality of non-invasive sensors to detect or eliminate harmonics.

In an embodiment, employing the multi-sensor fusion with respect to the sensor data generated from the plurality of non-invasive sensors, can further involve: using the multi-sensor fusion to analyze cross-correlated results, extract the sensor signatures, and correlate the sensor signatures to a normal situation and an abnormal situation, including damaged components of the turbine flowmeter.

An embodiment can further involve issuing an alert and/or an alarm to a local or remote location to provide an early warning for scheduling maintenance and repair of the turbine flowmeter, in response to identifying the health condition predicting maintenance for the turbine flowmeter.

In an embodiment, the plurality of non-intrusive sensors can be installed in proximity to positions of moving parts of the turbine flowmeter.

In an embodiment, a method for non-intrusively sensing and diagnosing a turbine flowmeter, can involve: monitoring a turbine flowmeter using multiple non-invasive sensors that observe turbine blades of the turbine flowmeter; identifying frequencies associated with a movement of the turbine blades based on a flow rate determined by the multiple non-invasive sensors; detecting frequencies of pressure waves associated with an operation of the turbine flowmeter; performing a multi-sensor fusion combining sensor data from the various non-invasive sensors among the multiple non-invasive sensors, wherein the combined sensor data includes both the frequencies extracted from the turbine blades and the pressure wave frequencies; and analyzing the combined sensor data to determine a health condition of the turbine flowmeter and to predict when maintenance for the turbine flowmeter is required.

In an embodiment, a system for non-intrusive sensing and diagnostics of a turbine flowmeter, can include: a plurality of non-invasive sensors for monitoring a turbine flowmeter comprising turbine blades, wherein the plurality of non-invasive sensors extract blade frequencies associated with the turbine blades based on a flow rate and detect pressure wave frequencies associated with the turbine flowmeter; and a multi-sensor fusion module for performing a multi-sensor fusion of sensor data generated from the plurality of non-invasive sensors including the extracted blade frequencies and the pressure wave frequencies, wherein the sensor data fused by the multi-sensor fusion module facilitate identification of a health condition of the turbine flowmeter and predictive maintenance with respect to the turbine flowmeter.

In an embodiment of the system, the plurality of non-invasive sensors can capture acoustic and acceleration signals through a wall and a housing of a device-under-test (DUT), wherein the DUT comprises the turbine flowmeter.

In an embodiment of the system, the blade frequencies generated by the turbine blades can be based on a correlation between the flow rate of the turbine flowmeter and a rotational speed of the turbine blades are determined from signal signatures extracted from acoustic and acceleration signals generated from the plurality of non-invasive sensors,

In an embodiment of the system, a time-frequency analysis can be performed with respect to sensor data derived from the plurality of sensors to detect or eliminate harmonics.

In an embodiment of the system, the blade-generated frequency of the turbine blades can be cross-correlated with a sensor-detected frequency detected by the plurality of non-invasive sensors.

In an embodiment of the system, the pressure wave frequencies generated by blade rotation of the turbine blades in the turbine meter can be detected using the plurality of non-invasive sensors within a defined two-dimensional moving capture window, and the plurality of non-invasive sensors can include at least one acoustic sensor and at least one accelerometer.

In an embodiment of the system, the at least one accelerometer can be in contact with a surface coupling of a wall of the turbine flowmeter.

In an embodiment of the system, at least one accelerometer and the at least one acoustic sensor can generate frequency responses including a maximum frequency related to the flow rate measurable normally by the turbine flowmeter.

In an embodiment of the system, the time-frequency analysis can further involve a high-order moment analysis and bi-spectrum with respect to sensor data generated from the plurality of non-invasive sensors to detect and eliminate harmonics.

In an embodiment of the system, the multi-sensor fusion can be used to analyze cross-correlated results, extract the sensor signatures, and correlate the sensor signatures to a normal situation and an abnormal situation, including damaged components of the turbine flowmeter.

In an embodiment of the system, an alert and/or an alarm can be issued to a local or remote location to provide an early warning for scheduling maintenance and repair of the turbine flowmeter, in response to identifying the health condition predicting maintenance for the turbine flowmeter.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

**Claims**

1. A method for non-intrusive sensing and diagnostics of a turbine flowmeter, comprising:

   monitoring a turbine flowmeter with a plurality of non-invasive sensors, the turbine flowmeter including turbine blades;
   extracting blade frequencies associated with the turbine blades based on a flow rate;
   detecting pressure wave frequencies associated with the turbine flowmeter; and
   employing multi-sensor fusion with respect to sensor data generated from the plurality of non-invasive sensors including the extracted blade frequencies and the pressure wave frequencies to identify a health condition of the turbine flowmeter and to predict maintenance for the turbine flowmeter.

2. The method of claim 1 wherein monitoring the turbine flowmeter with the plurality of non-invasive sensors, further comprises:
   capturing acoustic and acceleration signals through a wall and a housing of a device-under-test (DUT) using the plurality of non-invasive sensors, wherein the DUT comprises the turbine flowmeter.

3. The method of claim 1 wherein extracting the blade frequencies associated with the turbine blades based on the flow rate, further comprises:

   determining from signal signatures extracted from acoustic and acceleration signals generated from the plurality of non-invasive sensors, the blade frequencies generated by the turbine blades based on a correlation between the flow rate of the turbine flowmeter and a rotational speed of the turbine blades;
   performing a time-frequency analysis with respect to sensor data derived from the plurality of sensors to detect or eliminate harmonics; and
   cross-correlating a blade-generated frequency of the turbine blades with a sensor-detected frequency detected by the plurality of non-invasive sensors.

4. The method of claim 1 wherein detecting the pressure wave frequencies associated with the turbine flowmeter, further comprises:
   detecting the pressure wave frequencies generated by blade rotation of the turbine blades in the turbine meter using the plurality of non-invasive sensors within a defined two-dimensional moving capture window, wherein the plurality of non-invasive sensors includes at least one acoustic sensor and at least one accelerometer.

5. The method of claim 4 wherein the at least one accelerometer is in contact with a surface coupling of a wall of the turbine flowmeter.

6. The method of claim 4 wherein the at least one accelerometer and the at least one acoustic sensor generate frequency responses including a maximum frequency related to the flow rate measurable normally by the turbine flowmeter.

7. The method of claim 1 wherein the time-frequency analysis further comprises a high-order moment analysis and bi-spectrum with respect to sensor data generated from the plurality of non-invasive sensors to detect or eliminate harmonics.

8. The method of claim 1 wherein employing the multi-sensor fusion with respect to the sensor data generated from the plurality of non-invasive sensors, further comprises:
   using the multi-sensor fusion to analyze cross-correlated results, extract the sensor signatures, and correlate the sensor signatures to a normal situation and an abnormal situation, including damaged components of the turbine flowmeter.

9. A method for non-intrusively sensing and diagnosing a turbine flowmeter, the method comprising:

monitoring a turbine flowmeter using multiple non-invasive sensors that observe turbine blades of the turbine flowmeter;

identifying frequencies associated with a movement of the turbine blades based on a flow rate determined by the multiple non-invasive sensors;

detecting frequencies of pressure waves associated with an operation of the turbine flowmeter;

performing a multi-sensor fusion combining sensor data from the various non-invasive sensors among the multiple non-invasive sensors, wherein the combined sensor data includes both the frequencies extracted from the turbine blades and the pressure wave frequencies; and analyzing the combined sensor data to determine a health condition of the turbine flowmeter and to predict when maintenance for the turbine flowmeter is required.

10. A system for non-intrusive sensing and diagnostics of a turbine flowmeter, comprising:

a plurality of non-invasive sensors for monitoring a turbine flowmeter comprising turbine blades, wherein the plurality of non-invasive sensors extract blade frequencies associated with the turbine blades based on a flow rate and detect pressure wave frequencies associated with the turbine flowmeter; and

a multi-sensor fusion module for performing a multi-sensor fusion of sensor data generated from the plurality of non-invasive sensors including the extracted blade frequencies and the pressure wave frequencies, wherein the sensor data fused by the multi-sensor fusion module facilitate identification of a health condition of the turbine flowmeter and predictive maintenance with respect to the turbine flowmeter.

101

FIG. 1A
(Prior Art)

102

FIG. 1B
(Prior Art)

103

FIG. 1C
(Prior Art)

104

FIG. 1D
(Prior Art)

FIG. 2A
(Prior Art)

FIG. 2B
(Prior Art)

FIG. 3

EP 4 614 120 A1

FIG. 4

17

FIG. 5

FIG. 6A

FIG. 6B

**FIG. 7**

Europäisches
Patentamt

European
Patent Office

Office européen
des brevets

## EUROPEAN SEARCH REPORT

**Application Number**

EP 25 15 8940

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/234709 A1 (MACKIE DAVID [US] ET AL) 17 August 2017 (2017-08-17) | 1,2,8-10 | INV. G01F25/10 |
| A | * paragraphs [0003], [0042] - [0124], [0134] - [0145]; figures 2, 6 * | 3-7 | G01F1/10 G01F1/06 |
| X | US 2020/033167 A1 (SEXTON DANIEL WHITE [US] ET AL) 30 January 2020 (2020-01-30) | 1,2,8-10 | |
| A | * paragraphs [0032] - [0044], [0054] - [0056], [0062] - [0065], [0069], [0072] - [0073]; figures 1, 11, 14 * | 3-7 | |
| A | AL-MANIE M A ET AL: "Turbine Flowmeter Condition Monitoring using Evolutionary Spectral Analysis", PROCEEDINGS OF THE NATIONAL ACADEMY OF SCIENCES, INDIA. SECTION A, PHYSICAL SCIENCES, NATIONAL ACADEMY OF SCIENCE, ALLAHABAD, IN, vol. 85, no. 3, 24 July 2015 (2015-07-24), pages 451-455, XP035536306, ISSN: 0369-8203, DOI: 10.1007/S40010-015-0219-Z [retrieved on 2015-07-24] * the whole document * | 1-10 | |
| A | US 2010/030493 A1 (RAO ASWATHANARAYAN RAMA [IN]) 4 February 2010 (2010-02-04) * the whole document * | 1-10 | |

TECHNICAL FIELDS SEARCHED (IPC)

G01F
G01H

-/--

The present search report has been drawn up for all claims

| Place of search | Date of completion of the search | Examiner |
|---|---|---|
| The Hague | 16 July 2025 | Myrillas, K |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 8940

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHMED UMAIR ET AL: "A review of aircraft auxiliary power unit faults, diagnostics and acoustic measurements", PROGRESS IN AEROSPACE SCIENCES, OXFORD, GB, vol. 124, 30 April 2021 (2021-04-30), XP086597456, ISSN: 0376-0421, DOI: 10.1016/J.PAEROSCI.2021.100721 [retrieved on 2021-04-30] * the whole document * ----- | 1-10 | |

TECHNICAL FIELDS
SEARCHED        (IPC)

The present search report has been drawn up for all claims

| Place of search | Date of completion of the search | Examiner |
|---|---|---|
| The Hague | 16 July 2025 | Myrillas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

page 2 of 2

**ANNEX TO THE EUROPEAN SEARCH REPORT
ON EUROPEAN PATENT APPLICATION NO.**

EP 25 15 8940

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2025

| Patent document cited in search report | Publication date | Patent family member(s) | | Publication date |
|---|---|---|---|---|
| US 2017234709 A1 | 17-08-2017 | US | 2017234709 A1 | 17-08-2017 |
| | | US | 2017238072 A1 | 17-08-2017 |
| | | WO | 2018152350 A1 | 23-08-2018 |
| US 2020033167 A1 | 30-01-2020 | NONE | | |
| US 2010030493 A1 | 04-02-2010 | US | 2010030493 A1 | 04-02-2010 |
| | | WO | 2008093349 A1 | 07-08-2008 |

EPO FORM P0459

For more details about this annex : see Official Journal of the European Patent Office, No. 12/82